**Europäisches Patentamt**

**European Patent Office**

**Office européen des brevets**

(19)

(11) Veröffentlichungsnummer: **0 263 424 B1**

(12) **EUROPÄISCHE PATENTSCHRIFT**

(45) Veröffentlichungstag der Patentschrift: **19.06.91**

(51) Int. Cl.⁵: **C02F 1/58**, C02F 1/52

(21) Anmeldenummer: **87114234.5**

(22) Anmeldetag: **29.09.87**

(54) Verfahren zum Entfernen von Arsen aus arsenhaltigen Abwässern.

(30) Priorität: **29.09.86 DE 3633066**

(43) Veröffentlichungstag der Anmeldung:
**13.04.88 Patentblatt 88/15**

(45) Bekanntmachung des Hinweises auf die
Patenterteilung:
**19.06.91 Patentblatt 91/25**

(84) Benannte Vertragsstaaten:
**AT DE FR IT**

(56) Entgegenhaltungen:
**GB-A- 1 502 775**

**PATENT ABSTRACTS OF JAPAN, Band 11,
Nr. 8 (C-396)[2455], 9. Januar 1987; & JP-A-61
185 375 (SHINKO FUAUDORAA K.K.)
19-08-1986**

**GLASTECHNISCHE BERICHTE, Band 57, Nr.
11, 1984, Seiten 280-285, Wiesbaden, DE; K.
DÖRING: "Abwässer aus der Bleikristallveredelung durch Schleifen und Säurepolieren"**

**Impurity Control and Disposal, Proceedings
15th Annual Hydro-metallurgical Meeting of
CIM, Vancouver (1985) "Ferric arsenate compounds. Are they environmentally safe? So-**
lubilities of basic ferric arsenates".

(73) Patentinhaber: **FRAUNHOFER-GESELLSCHAFT
ZUR FÖRDERUNG DER ANGEWANDTEN FOR-
SCHUNG E.V.
Leonrodstrasse 54
W-8000 München 19(DE)**

(72) Erfinder: **Hutter, Frank
Randersackererstrasse 81
W-8700 Würzburg(DE)**
Erfinder: **Kaiser, Alfred
Am Rosengarten 18
W-8702 Kist(DE)**
Erfinder: **Schmidt, Helmut
Tilman-Riemenschneider-Strasse 15
W-8706 Höchberg(DE)**
Erfinder: **Szillus, Bernhard
Goldbergstrasse 21
W-6502 Niederolm(DE)**

(74) Vertreter: **Barz, Peter, Dr. et al
Patentanwälte Dipl.-Ing. G. Dannenberg Dr.
P. Weinhold, Dr. D. Gudel Dipl.-Ing. S. Schubert, Dr. P. Barz Siegfriedstrasse 8
W-8000 München 40(DE)**

**Beschreibung**

Die Erfindung betrifft ein Verfahren zum Entfernen von Arsen aus arsenhaltigen Prozeßwässern aus dem Bereich der Glasindustrie.

Bei der Bleikristallglas- und Kristallglasproduktion wird Arsentrioxid ($As_2O_3$) der Glasschmelze als Läutermittel zugesetzt. Der Massenanteil am Gemengeversatz liegt in der Regel bei weniger als 1 %. Ein Teil des eingesetzten Arsens entweicht aus der Glasschmelze; ein Massenanteil von ca. 0,2 % verbleibt fest eingebunden in der Glasmatrix. Das Arsen kann jedoch in Veredelungsprozessen, bei denen die Glasoberfläche bearbeitet wird, zum Teil wieder freigesetzt werden. Dies geschieht z.B. in der Säurepolitur (dabei wird Glas mit Schwefelsäure-Flußsäure-Mischungen behandelt und zum Teil wieder aufgelöst) oder beim Glasschleifen. Hier wird Wasser als Kühl- und Schmiermittel eingesetzt, so daß aus dem feinen Schleifabrieb Bestandteile in Lösung gehen können. Abwässer aus diesen beiden Bereichen können deshalb gelöste Glasbestandteile enthalten. Bedenklich sind in diesem Zusammenhang vor allem Blei und Arsen.

Um den Anfall an blei- und arsenbelasteten Schleifereiabwässern, die bis zu etwa 10 mg/l Blei und 3 mg/l Arsen enthalten können, zu vermindern, sind seit einiger Zeit Anlagen in Betrieb, mit denen das Schleifereiwasser im Kreislauf gefahren werden kann. Dabei wird der im Wasser suspendierte Glasabrieb entfernt. Eine Aufkonzentration des Bleis wird verhindert, indem durch Einleiten von Kohlendioxid schwerlösliches Bleicarbonat $PbCO_3$ ausgefällt und nach Zugabe eines Flockungsmittels zusammen mit dem Glasabrieb kontinuierlich abfiltriert wird. Auf diese Weise läßt sich der Wasserverbrauch um 90 % reduzieren und die Bleikonzentration kann auf etwa 0,5 mg/l verringert werden. Es stellte sich jedoch heraus, daß die Kreislaufführung zu einer Anreicherung des gelösten Arsens führt. Gehalte bis zu 10 mg/l Arsen wurden gemessen. Weil beim Schleifvorgang das Wasser fein versprüht wird, entsteht dadurch die Gefahr einer zu hohen Arsenbelastung am Arbeitsplatz des Glasschleifers. Außerdem kann das Arsen durch Verspritzen des Kreislaufwassers wieder in das Abwasser gelangen.

Zur Entfernung von Arsen aus wässrigen Lösungen sind in der Literatur die unterschiedlichsten Verfahren beschrieben, z.B. adsorptive Verfahren unter Verwendung von Aktivkohle, Aluminiumoxid oder Tonen als Adsorptionsmitteln, die elektrochemische Abscheidung, die Extraktion mit organischen Lösungsmitteln und Fällungsverfahren unter Verwendung von Eisensalzen oder Aluminiumsalzen. Fällungen als Arsensulfid, Calciumarsenat, Manganarsenat, Bleiarsenat oder Magnesiumammoniumarsenat sind ebenfalls bekannt. Die meisten dieser Verfahren sind für spezielle Problemstellungen, wie sie beispielsweise bei der Abwasserbehandlung von Prozeßwässern aus der Glasindustrie auftreten, nicht brauchbar. Dies liegt u.a. daran, daß die Selektivität und Kapazität von adsorptiven Verfahren für solche Abwässer, die eine Vielzahl verschiedenster Inhaltsstoffe enthalten, nicht ausreichen, die elektrochemische Abscheidung, wenn überhaupt realisierbar, nur mit extremem Kostenaufwand möglich wäre und auch zuverlässige Fällungsverfahren wegen der hohen auftretenden Abwasservolumina und den damit verbundenen kurzen Verweilzeiten sowie wegen der schwankenden Schadstoffgehalte von ihrer Abreinigungswirkung her unbefriedigend oder wirtschaftlich nicht vertretbar sind.

Die in der EP-A- 139 622 und JP-A-61-68191 beschriebenen Verfahren erfordern mehrere Fällungsstufen in unterschiedlichen pH- Bereichen. Der damit verbundene apparative Aufwand und Raumbedarf (separate Fällungsbecken mit jeweiligen Dosiereinrichtungen, Rührwerken etc ) schließt eine wirtschaftliche Ankoppelung an vorhandene Prozeß-und Abwasserführungen aus.

Aufgabe der Erfindung ist es daher, ein Verfahren zum Abtrennen von Arsen aus arsenhaltigen Prozeßwässern aus der Glasindustrie, bereitzustellen, das ohne großen Aufwand in vorhandene Abwasserbehandlungssysteme (z.B. Schleifereiabwasser, Kreislaufführung, Bleiabtrennung, Neutralisation) integriert werden kann.

Gegenstand der Erfindung ist ein Verfahren zum Entfernen von Arsen aus Prozeß- und Abwässern aus dem Bereich der Glasindustrie durch einstufige Fällung mit Eisenhydroxyd, das dadurch gekennzeichnet ist, daß man ohne Zugabe von Oxidationsmitteln dem Abwasser Eisen(III)sulfat zudosiert und in der Fällungsstufe mit Calciumhydroxid neutralisiert, worauf die ausgefällten Feststoffe abgetrennt werden.

Das erfindungsgemäße Verfahren ermöglicht eine Verringerung der in Prozeß- und Abwässern der Glasindustrie, z.B. in Schleifereiabwässern, auftretenden Arsengehalte von bis zu 10 mg/l auf einen Restgehalt von <0.1 mg/l, z.B. 0.05 bis 0.1 mg/l. Dieses Ergebnis ist vor allem deshalb überraschend, weil im Gegensatz zu herkömmlichen Verfahren zur Entarsenierung von Abwässern, wie sie z.B. in der DD-PS 69 089 beschrieben sind, auf die Zugabe von Oxidationsmitteln verzichtet werden kann, obwohl das Schleifereiabwasser mit den darin enthaltenen Kühlmitteln (Tenside) und Desinfektionsmitteln ein relativ hohes Potential an reduzierenden Substanzen enthält.

Im erfindungsgemäßen Verfahren wird dem zu behandelnden Abwasser Eisen(III)-sulfat zudosiert. Dies kann in fester Form, üblicherweise jedoch in Form von verdünnten oder konzentrierten wässrigen Lösungen erfolgen. Bei der Behandlung von Schleifereiabwässern beträgt die Eisen(III)-sulfatmenge gewöhnlich 10 mg bis 1 g, vorzugsweise 30 mg bis 100 mg $Fe^{3+}$ pro Liter Abwasser.

Durch die Verwendung von Eisen(III)-sulfat als Fällungsmittel kommt es zu einer Mitfällung von Arsen in dem entstehenden Eisenhydroxid-Niederschlag entsprechend den folgenden Reaktionsgleichungen (1) und (2):

$$Fe_2(SO_4)_3 + 2\ H_3AsO_4 \rightarrow 2\ FeAsO_4\downarrow + 3\ H_2SO_4 \quad (1)$$
$$Fe_2(SO_4)_3 + 3\ H_2O \rightarrow 2\ Fe(OH)_3\downarrow + 3\ H_2SO_4 \quad (2)$$

Um das insbesondere bei der Kreislaufführung des zu behandelnden Abwassers auftretende unerwünschte Absinken des pH-Wertes und ein Ansteigen der Sulfationen-Konzentration zu vermeiden, wird erfindungsgemäß mit Calciumhydroxid entsprechend der folgenden Reaktionsgleichung (3) neutralisiert:

$$H_2SO_4 + Ca(OH)_2 \rightarrow CaSO_4\downarrow + 2\ H_2O \quad (3)$$

Die Sulfationen werden hierbei als schwerlöslicher Gips ($CaSO_4 \cdot 2\ H_2O$) ausgefällt, der zusammen mit den anderen Feststoffen abgetrennt werden kann. Das Calciumhydroxid kann z.B. in Form von Kalkhydrat oder Löschkalk eingesetzt werden. Seine Menge entspricht vorzugsweise einem Molverhältnis von $Fe^{3+} : Ca^{2+}$ von mindestens etwa 2:3. Insgesamt soll durch die Neutralisation mit Calciumhydroxid ein pH-Wert des zu behandelnden Abwassers von 7,5 bis 8,5 aufrechterhalten werden.

Im erfindungsgemäßen Verfahren gelingt es somit, durch einstufige Fällung mit Eisen(III)-sulfat als Fällungsmittel und Calciumhydroxid als Neutralisationsmittel eine Anreicherung prozeßfremder Substanzen in dem Kreislaufsystem wirksam zu vermeiden, so daß eine problemlose Eingliederung der Entarsenierungsstufe in den Gesamtprozeß und eine kontinuierliche Verfahrensführung möglich sind. Im Vergleich zu bekannten Verfahren mit zwei- oder mehrstufiger Fällung ist der apparative Aufwand und dementsprechend der Raumbedarf wesentlich geringer, was die Integration in vorhandene Abwasserführungen erleichtert.

Gegenüber Verfahren, die mit Fe (II) und Oxidationsmitteln arbeiten, wird im oben genannten pH-Bereich eine niedrigere Arsen-Endkonzentration erzielt.

Überraschenderweise hat sich auch gezeigt, daß die erfindungsgemäße Entarsenierungsbehandlung die bei der Abreinigung von Schleifereiabwässern nachgeschalteten Verfahrensschritte, d.h. die Abtrennung des Bleis und des suspendierten Glasabriebs, nicht beeinträchtigt.

Im Anschluß an die Neutralisation kann daher in das Abwasser Kohlendioxid eingeleitet werden, um Blei als schwerlösliches Bleicarbonat auszufällen. Es kann auch ein Flockungsmittel, z.B. ein modifiziertes Tonerdepräparat, zugegeben werden, worauf man die festen Bestandteile (Eisenhydroxid, Gips, Bleicarbonat, Flockungsmittel und Glasabrieb) z.B. sedimentiert, über ein Kratzband austrägt und das Wasser durch ein Filtervlies filtriert.

Die Abtrennung der ausgefällten Niederschläge kann nach beliebigen bekannten Methoden in einem Schritt oder mehreren Teilschritten durchgeführt werden.

Obwohl das erfindungsgemäße Verfahren vorstehend unter Bezug auf Kreislauf-geführte Schleifereiabwässer erläutert wurde, ist es nicht auf diesen Anwendungsbereich beschränkt, sondern kann mit Erfolg auch auf nicht im Kreislauf geführte und deshalb geringer arsenbelastete Schleifereiabwässer, sowie auf Säurepoliturabwässer angewandt werden.

## Ansprüche

1. Verfahren zum Entfernen von Arsen aus Prozeß- und Abwässern aus dem Bereich der Glasindustrie durch einstufige Fällung mit Eisenhydroxid, dadurch gekennzeichnet, daß man ohne Zugabe von Oxidationsmitteln dem Abwasser Eisen(III)-sulfat zudosiert und in der Fällungsstufe mit Calciumhydroxid neutralisiert, worauf die ausgefällten Feststoffe abgetrennt werden.

2. Verfahren nach Anspruch 1, dadurch gekennzeichnet, daß es kontinuierlich im Kreislaufbetrieb durchgeführt wird.

3. Verfahren nach Anspruch 1 oder 2, dadurch gekennzeichnet, daß das Molverhältnis von $Fe^{3+} : Ca^{2+}$ mindestens etwa 2:3 beträgt.

4. Verfahren nach einem der Ansprüche 1 bis 3, dadurch gekennzeichnet, daß man in der Fällungsstufe nach der Neutralisation Kohlendioxid in das Abwasser einleitet, um zusätzlich Blei auszufällen.

5. Verfahren nach einem der Ansprüche 1 bis 4, dadurch gekennzeichnet, daß man in der Fällungsstufe ein Flockungsmittel zugibt und die Feststoffe sedimentiert.

## Claims

1. A process for removing arsenic from process and waste waters in the field of glass industry by one-step precipitation with iron hydroxide, characterized by adding ferric sulfate to the waste water, without addition of oxidants, and by neutralizing with calcium hydroxide in the precipitation stage with subsequent separation of the precipitated solids.

2. A process according to claim 1, characterized in that it is carried out continuously in a recycle fashion.

3. A process according to claim 1 or 2, characterized in that the molar ratio of $Fe^{3+} : Ca^{2+}$ is at least 2 : 3.

4. A process according to any one of claims 1 to 3, characterized in that, in the precipitation stage, carbon dioxide is introduced into the waste water after the neutralization in order to additionally precipitate lead.

5. A process according to any one of claims 1 to 4, characterized in that a flocculating agent is added in the precipitation stage and the solids are sedimented.

**Revendications**

1. Procédé destiné à éliminer l'arsenic des eaux de procédé et des eaux usées dans le domaine de l'industrie du verre, par précipitation en une étape à l'hydroxyde de fer, caractérisé en ce que, sans addition d'oxydants, on ajoute aux eaux usées du sulfate de fer(III) et on le neutralise dans l'étape de précipitation avec de l'hydroxyde de calcium, les solides précipités étant ensuite séparés.

2. Procédé selon la revendication 1, caractérisé en ce qu'il est mis en oeuvre en continu en circuit fermé.

3. Procédé selon la revendication 1 ou 2, caractérisé en ce que la proportion molaire $Fe^{3+}:Ca^{2+}$ est d'au moins environ 2:3.

4. Procédé selon l'une des revendications 1 à 3, caractérisé en ce qu'on introduit dans les eaux usées, pour provoquer encore une précipitation du plomb, de l'anhydride carbonique après la neutralisation au cours de l'étape de précipitation.

5. Procédé selon l'une des revendications 1 à 4, caractérisé en ce que, dans l'étape de précipitation, on ajoute un floculant et on provoque la sédimentation des matières solides.